(19) **Europäisches Patentamt / European Patent Office / Office européen des brevets**

(11) **EP 1 973 220 B1**

(12) **EUROPEAN PATENT SPECIFICATION**

| | |
|---|---|
| (45) Date of publication and mention of the grant of the patent: **15.02.2017 Bulletin 2017/07** | (51) Int Cl.: **H02M 3/28** *(2006.01)* **H02M 1/42** *(2007.01)* **H02M 3/337** *(2006.01)* **H02M 1/00** *(2007.01)* |
| (21) Application number: **06840727.9** | (86) International application number: **PCT/CN2006/003697** |
| (22) Date of filing: **29.12.2006** | (87) International publication number: **WO 2007/076702 (12.07.2007 Gazette 2007/28)** |

(54) **A RESONANT DC/DC CONVERTER AND ITS CONTROL METHOD**

RESONANZ-GLEICHSTROM-GLEICHSTROM-WANDLER UND STEUERVERFAHREN DAFÜR

CONVERTISSEUR CONTINU-CONTINU AUTO-OSCILLANT ET SON PROCEDE DE COMMANDE

| | |
|---|---|
| (84) Designated Contracting States: **DE** | • **ZHU, Chunhui** **Shenzhen, Guangdong 518057 (CN)** • **ZHAO, Haizhou** **Shenzhen, Guangdong 518057 (CN)** |
| (30) Priority: **30.12.2005 CN 200510003362** | |
| (43) Date of publication of application: **24.09.2008 Bulletin 2008/39** | (74) Representative: **Hoffmann Eitle** **Patent- und Rechtsanwälte PartmbB** **Arabellastraße 30** **81925 München (DE)** |
| (73) Proprietor: **Emerson Network Power, Energy Systems, North America, Inc.** **Lorain, OH 44052 (US)** | (56) References cited: **CN-A- 1 220 515      CN-A- 1 595 780** **CN-A- 1 595 780      CN-A- 1 885 699** **JP-A- H07 135 769    US-A1- 2005 052 249** **US-A1- 2005 052 249   US-B1- 6 366 070** |
| (72) Inventors: • **LIU, Zhiyu** **Shenzhen, Guangdong 518057 (CN)** | |

## Description

### FIELD OF THE INVENTION

The present invention relates to DC power supply converting technique, and more particularly, to a resonance DC/DC converter and a method for controlling the same.

### BACKGROUND OF THE INVENTION

In JP H07 135769 A there is described a DC resonance converter. To avoid an unstable operation caused by a decline of an operation frequency over a whole load range, PWM control is performed in a light load range.

Further, in US 6,366,070 B1 there is described a switching voltage regulator with dual modulation control scheme. A control circuit indirectly monitors load current. When the load decreases, the control circuit reduces both the duty ratio and the frequency of control signals which operate the switching transistors, thereby maintaining a high efficiency level over a wider output current range that can be achieved with fixed-frequency control signals.

In CN 1595780 A there is described another control of a resonance DC/DC converter relying on a feedback PI control.

Still further, in US 2005/0052249 A1 there is described a variable frequency PWM controller circuit that generates a variable frequency pulse width modulation signal. The frequency and duty cycle of the output PWM signal vary with the error-amplified voltage of a feedback loop.

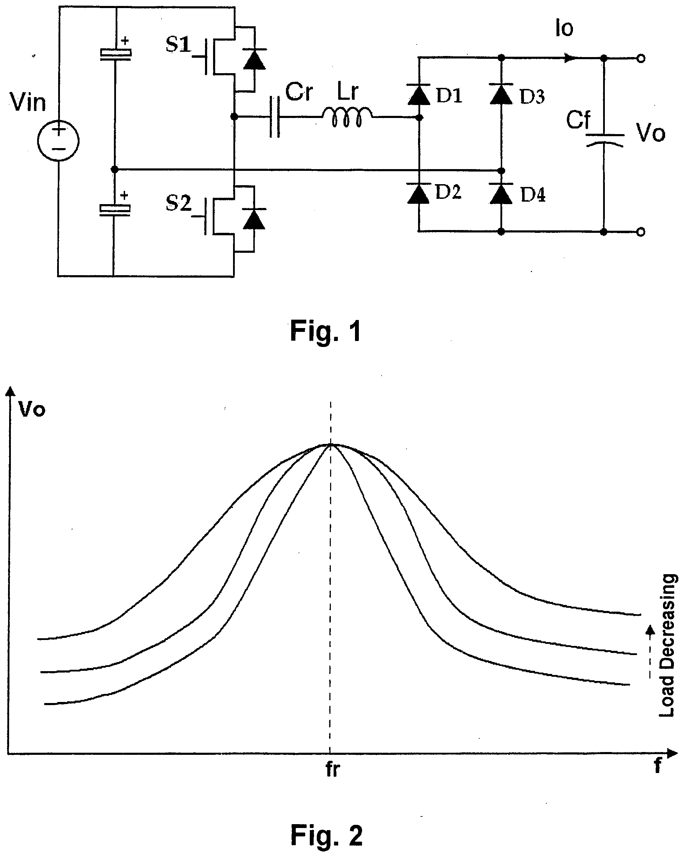

At present, miniaturization and high-frequency are the trend of development of power supplies. However, the increase of switching frequency will result in the big loss of the switch device, and this can not be resolved by the conventional BUCK converter, while the resonance converter can resolve this problem properly. Taking the series resonance converter as an example, the series resonance DC/DC converter adopts resonance converting technique. As the resonance element operates at the sine resonance state, the voltage across the switch device is naturally cross-zero, thereby realizing zero-voltage turn-on, and very small loss of the power supply. This topology usually utilizes pulse frequency modulation (PFM) mode, stabilizing the output voltage by changing the operating frequency. Figure 1 is the basic form of the half-bridge SRC series resonance DC/DC converter. When the circuit is controlled in PFM mode, the two switch devices S1, S2 are complementary symmetrically driven, and are respectively turned on 50% of switching cycle, (which is an ideal value, and should be slightly smaller than 50% in consideration of the setting of dead zone). The relationship between the gain of the output voltage of the power supply M and the operating frequency f is:

$$M = \frac{V_O}{V_{in}} = \frac{0.5}{Q_S \left| \dfrac{f}{f_r} - \dfrac{f_r}{f} \right|} \qquad (1)$$

Wherein $V_o$ and $V_{in}$ are, respectively, the output voltage, the input voltage, f is the operating frequency,

$$f_r = \frac{1}{2\pi\sqrt{Lr \cdot Cr}}, \qquad Q_S = \frac{2\pi f_r L_r P_o}{U_o^2},$$ $f_r$ is the resonance frequency, $L_r$ is the resonance inductance, $C_r$ is the resonance capacitance, and $P_o$ is the output power.

As seen from the formula (1), when the operating frequency f is larger than the resonance frequency $f_r$, the higher the operating frequency is, the lower the voltage gain M is. Likewise, when the operating frequency f is smaller than the resonance frequency $f_r$, the lower the operating frequency is, the lower the voltage gain M is. The relationship curve of the series resonance topology controlling frequency f and the output voltage $V_o$ is shown in Figure 2. As seen from Figure 2, a key difficult problem of the series resonance converter is that the output voltage is difficult to be stabilized under the condition of the light load and non-load. When the controlling frequency is larger than the resonance frequency $f_r$, the output voltage of the series resonance topology decreases as the controlling frequency is increasing, and the output voltage tends to be smooth when the load decreases to the light load state. Therefore, the operating frequency needs to increase very high in order to stabilize the voltage. However, overbroad of the range of the operating frequency will cause difficulty of optimization of the magnetic device, and the higher the operating frequency is, the larger the loss of the circuit is. In addition, when the load is close to non-load, the output voltage may rise instead, thereby resulting in impossible control of negative feedback. Accordingly, in the industry of the power supply, someone adopts a fixed load at the output end so as to stabilize the output voltage under the condition of light load and non-load. However, this operation may increase non-load loss, and decrease the efficiency of the power supply.

In sum, the pure pulse frequency control will result in overbroad of the range of the operating frequency, even failure, and cause the problems of difficulty of optimization of the magnetic device and the large loss of the circuit, and will result in difficulty of designing a feedback control. Therefore, the simple frequency modulated control cannot fulfill the need of stabilizing the voltage at the condition of light load or non-load.

The defect of the frequency modulated control mode has been described in connection with the half bridge series resonance circuit, and the phenomenon of the full-bridge series resonance circuit is the same as that of the half-bridge series resonance. In theory, there are similar problems in all of the frequency modulation control resonance circuit.

SUMMARY OF THE INVENTION

The object of the present invention is to provide a method for controlling a resonance DC/DC converter and an apparatus thereof so as to resolve the problems in the prior art, i.e., if the variable frequency control is used when the load is either in light load or non-load state, it is hard for the magnetic element to be optimized, and it is hard for the voltage of the magnetic element to be stabilized, and the circuit loss is overlarge. In order to achieve the above-mentioned object, the present invention according to claim 1 provides a method for controlling a resonance DC/DC converter, which adjusts an output voltage by changing a turn-on frequency of input switch device(s) of a resonance circuit of the converter, and extends a range of the output voltage of the resonance circuit by adjusting a duty ratio of the switch device(s) based on a feedback signal of a load circuit.

The input switch device(s) of the resonance circuit are controlled by a driving pulse via a drive circuit, and acquisition of the driving pulse comprises the following steps of:

1) acquiring a feedback signal of a load circuit;
2) determining whether a load operates at a light load or non-load state, based on the feedback signal; and
3) using a pulse signal of which both the frequency and duty ratio vary with a feedback signal as a driving pulse of a drive circuit, if the load operates at a light load or non-load state, so as to have the resonance circuit operate in a combined mode of PWM (pulse width modulation) control and PFM control; otherwise using a pulse signal of which the duty ratio is stable and the frequency varies with the feedback signal as the driving pulse of the drive circuit so as to have the resonance circuit operate in the PFM control mode, wherein, at the light load state, the frequency decreases with the increase of the duty ratio.

Preferably the step 1) may further include the following steps of:

1a) sampling a feedback voltage from the load circuit; and
1b) having the feed voltage subject to a negative feedback compensatory operation to obtain the feedback signal.

The selection of PFM control and PFM+PWM control in the aforesaid control method is preferably achieved by the following process: in the step 2), obtaining a pulse frequency control signal and a pulse width modulation signal after an operational process of the feedback signal; the operational process of the pulse width modulation signal comprising comparing with a reference signal 1 to determine whether or not the load operates at a light load or non-load state, wherein the reference signal 1 is determined according to the electric characteristic of the load; in the step 3), generating the driving pulse adjusted by both the pulse frequency control signal and the pulse width modulation signal when the load operates at a light load or non-load state; otherwise generating the driving pulse adjusted by the pulse frequency control signal only, of which the duty ratio is stable.

The above-mentioned method can further comprise selection of PWM control only: in the step 2), the operational process of the pulse frequency control signal comprising comparing with a reference signal 2 to determine whether or not the load operates at a state approximate to non-load, wherein the reference signal 2 is determined according to the electric characteristic of the load, and the reference signal 2 satisfies, if it is determined that the load operates at a state approximate to non-load based on the reference signal 2, it must be determined that the load operates at a light load or non-load state based on the reference signal 1; in the step 3), when the load operates at a state approximate to non-load state, generating the driving pulse adjusted by the pulse width modulation signal only, of which the frequency is stable. For the object of the present invention, according to claims 5 it provides a resonance DC/DC converter, comprising:

a drive circuit and a resonance circuit, the drive circuit controlling input switch device(s) of the resonance circuit based on an inputted driving pulse, and the resonance circuit providing a converted power supply to a load circuit under the control of the drive circuit, and
a negative feedback compensatory regulator for performing a negative feedback compensation operation of a feedback voltage being sampled from the load circuit to obtain a feedback signal; and
a discriminator for determining a load state of the load circuit based on the inputted feedback signal, and outputting a driving pulse modulation signal;
a driving pulse generator for modulating and outputting a driving pulse based on the inputted driving pulse modulation signal, wherein if the load operates at a light load or non-load state, both a frequency and duty ratio of the outputted driving pulse being adjusted as the feedback signal changes; otherwise, the duty ratio of the outputted driving pulse being stable and the frequency of the outputted driving varying as the feedback signal changes, wherein, at the light load state, the frequency decreases with the increase of the duty ratio.

A preferred embodiment of performing the PFM control and PFM+PWM control of the resonance DC/DC converter is to use two separate driving signal generating circuit modules, i.e., the driving pulse generator comprising a pulse frequency control circuit and a pulse frequency control plus a pulse width modulation circuit; if the discriminator determines that the load operates at a light load or non-load state, the pulse frequency control plus pulse width modulation circuit being provided with the driving pulse modulation signal, and controlled to output the driving pulse of which both the frequency and duty ratio vary as the feedback signal changes; otherwise the pulse frequency control circuit being provided with the driving pulse modulation signal, and controlled to output the driving pulse of which the duty ratio is stable and the frequency varies as the feedback signal changes.

Another preferred embodiment of performing forming the PFM control and PFM+PWM control of the above-mentioned resonance DC/DC converter can use only a driving signal generating circuit module: the discriminator comprising an operational circuit 1 and an operational circuit 2, wherein the operational circuit 1 is provided with a reference signal 1, and the driving pulse modulation signal comprises a pulse frequency control signal and a pulse width modulation signal; the feedback signal being outputted as the pulse width modulation signal after operated by the operational circuit and compared with the reference signal 1; the feedback signal being outputted as the pulse frequency control signal after operated by the operational circuit 2; wherein the reference signal 1 is determined according to the electric characteristic of the load, when the load operates at light-load or no-load state, the outputted pulse width modulation signal varies as the feedback signal changes; otherwise, it is stable; the driving pulse generator comprising a pulse frequency control circuit and a pulse width modulation circuit, wherein the pulse frequency control circuit generates the variable frequency pulse of which the frequency is controlled by the pulse frequency control signal, and the pulse width modulation circuit outputs the driving pulse after the pulse width modulation of the variable frequency pulse is adjusted based on the pulse width modulation signal. The pulse width modulation circuit may output the driving pulse after comparing and combining the pulse width modulation signal with the variable frequency pulse.

It is also applicable that the variable frequency pulse is inputted at the synchronized terminal of the pulse width modulation circuit, and the pulse width modulation circuit performs the pulse width modulation for the inputted variable frequency pulse based on the pulse width modulation signal and then outputs the driving pulse.

In order to achieve the simple PWM control at a state that is approximate to non-load state, it is preferred that the operational circuit 2 is provided with a reference signal 2; the feedback signal is operated and compared with the reference signal 2 by the operational circuit 2, and the output is the pulse frequency control signal; the reference signal 2 is determined according to the electric characteristic of the load, so that the outputted pulse frequency control signal is stable when the load operates at a state that is approximate to non-load state;

otherwise, it varies as the feedback signal changes; and the reference signal 2 satisfies, if it is determined that the load operates at a state approximate to non-load state based on the reference signal 2, it must be determined that the load operates at a light load or non-load state based on the reference signal 1.

The pulse frequency circuit may use the structure comprising a voltage controlled oscillator and a triangular wave generator connected in sequence; wherein the pulse frequency control signal is inputted into the voltage controlled oscillator to control its oscillating frequency, and the triangular wave generator outputs a variable frequency pulse of which the frequency is controlled.

With the above technical solution, the present invention has the following advantageous technical effects:

1) The PWM controlling mode is introduced into the controlling mode of the resonance DC/DC converter, realizing the two controlling modes of PFM and PFM +PWM. That is, the PFM controlling mode is used when the operating frequency of the power supply is relatively low, and the PFM +PWM controlling mode is introduced when the operating frequency of the power supply is too high. And the frequency can be fixed when the frequency is even higher, entering the PWM controlling mode. Therefore, the problem of the resonance converter is resolved, that is, the problem that the operating frequency is too high and the loss of the circuit is too large in case of light load and non-load, thereby enhancing the regulation ability of the output voltage of the resonance circuit, and expanding the voltage output range effectively.

2) The two modes of the PFM controlling and the PFM +PWM controlling are selectively parallel in logistic, and can be realized by adopting preferably the mode that the pulse frequency control circuit and the pulse width modulation circuit are connected in series. The preferred circuit avoids the use of many logical gate devices and the multi-channel negative feedback compensation regulators, and thus it is simple. And the switching of the two controlling modes is smooth, and the reliability and the dynamic characteristic of these two modes are very good.

The present invention is applicable to the modified topology of the resonance circuit, such as, a full-bridge serial or parallel connection resonance circuit, a half-bridge serial or parallel connection resonance circuit, and LLC, and so on, and it has great significance in terms of engineering.

The present invention will be described in detail in connection with the accompanying drawings and the embodiments.

BRIEF DESCRIPTION OF THE DRAWINGS:

Figure 1 is an illustrative view of a typical half bridge serial resonance circuit in the prior art.

Figure 2 is an illustrative graph of the characteristics of the circuit of Figure 1 operating in a PFM control mode.

Figure 3 is a schematic comparison diagram illustrating the output characteristics of the circuit of Figure 1 which is controlled with the control method according to the present invention.

Figure 4 is a functional block diagram of the DC/DC converter according to the present invention.

Figure 5 is a detailed block diagram of the circuit in the dashed block of Figure 4.

Figure 6 shows the relationship curves of a feedback signal of the DC/DC converter of Figure 4 versus frequency and duty ratio.

Figure 7 is a waveform graph of a driving pulse.

Figure 8 is another functional block diagram of the DC/DC converter according to the present invention.

DETAILED DESCRIPTION OF THE INVENTION:

A method for controlling a resonance DC/DC converter is provided, in which a output voltage is regulated by changing on-frequency of an input switch device in the resonance circuit, and the duty ratio of the switch device is regulated based on a feedback signal from the load circuit, so that the range of output voltage of the resonance circuit is expanded.

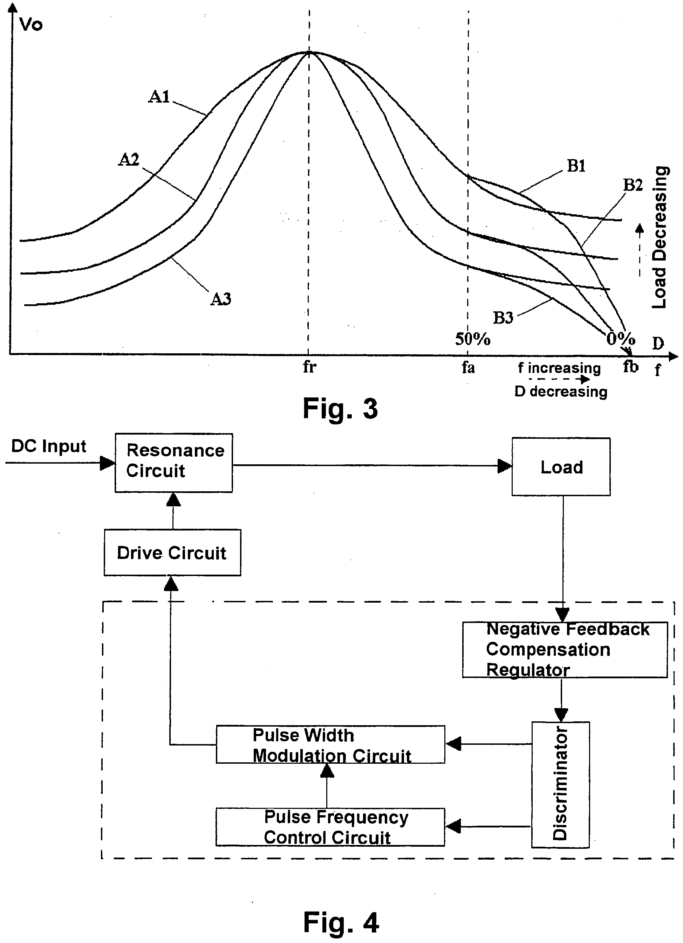

Now take the half bridge series resonance circuit of Figure 1 as an example, and the curves A1~A3 in Figure 3 show the characteristics of output voltage Vo versus frequency f of the circuit when it is controlled with only PFM control mode in deferent load conditions, wherein the duty ratio is 50%. It can be seen that as the load decreases, the curve of Vo tends to be flat, and is hard to be stabilized by increasing the operating frequency. Curves B1, B2, B3 in Figure 3 show the characteristics of output voltage Vo versus duty ratio D and frequency f when the switching frequencies of curves A1~A3 are above fa, after the circuit in a PFM control mode is switched to a PWM mode, and thus in a combined control mode, respectively, wherein duty ratio D decreases from 50% to 0. It can be seen from curves B1, B2 and B3, the output voltage begins to attenuate as the control frequency reaches fa, and rapidly attenuates to 0 at the control frequency fb, after the PFM+PWM control is used. As compared with a PFM control mode, the output characteristics are greatly improved.

The input switch device of the resonance circuit is controlled with a driving pulse through a drive circuit, and thus the switching from a PFM mode to a PFM+PWM mode is achieved by changing the driving pulse. The switching of the control modes depends directly on the loading conditions, and thus, the driving pulse can be achieved with the following method:

1) obtaining a feedback signal from the load circuit, the feedback signal being operated by the negative feedback compensation from the sampling feedback voltage of the load circuit;

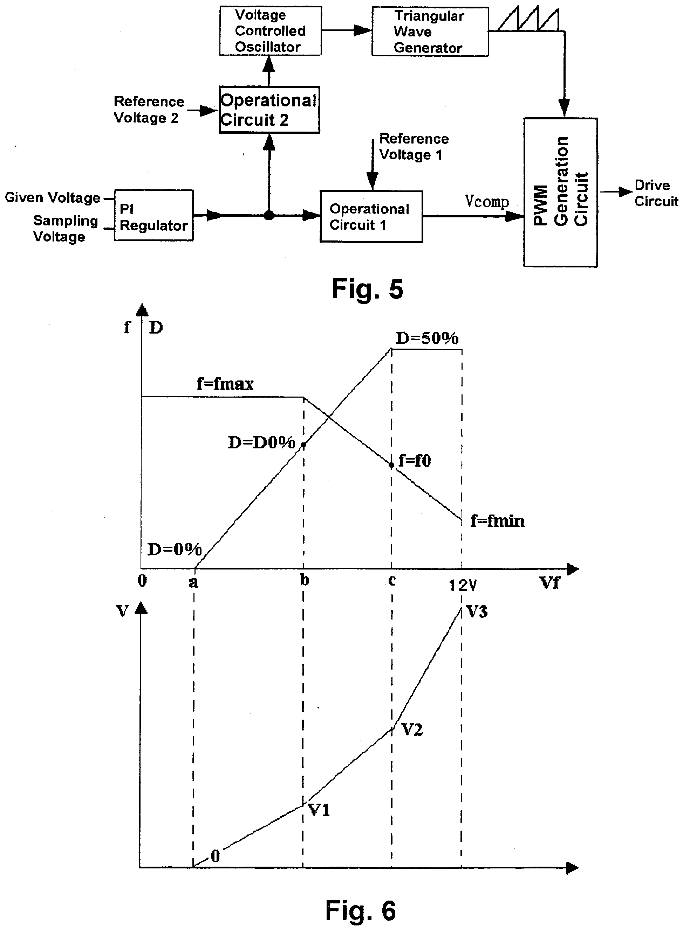

2) determining the working condition of the load based on the feedback signal, by operating the feedback signal and comparing it with reference signals, that is, the feedback signal being calculated, respectively, to obtain a pulse frequency control signal and a pulse width modulation signal. The operation (or calculation) of the pulse width modulation signal includes: comparing the feedback signal with a predetermined reference signal 1 after the feedback signal is scaled or subjected to addition or subtraction; and if it is lower than the reference signal 1 (or higher than this reference signal, depending on the logic features of the circuit, here assumed that the feedback signal is proportional to the voltage of the load, that is, the lower the feedback signal is, the smaller the load is), outputting the operated feedback signal directly as the pulse width modulation signal; otherwise, outputting the stable reference signal 1 as the pulse width modulation signal. At this time, the pulse width modulation signal is constant, and this corresponds to a simple PFM control mode. The reference signal 1 should be determined according to the electric characteristics of the load so that the results of the comparison and determination steps that are performed based on the reference signal 1 reflect correctly whether or not the load operates in a light load condition. The operation process of the pulse frequency control signal can be performed in the following two ways. One way is subjecting the feedback signal to such operations as scaling, addition or subtraction, etc., and then outputting directly the operated signal as the pulse frequency control signal, whereby the pulse frequency control signal always varies with the feedback signal, and thus, the resonance circuit always operates with a PFM control mode. The other way is similar to the above operation of the pulse width modulation signal, by further comparing the result of such operations as scaling, addition or subtraction with a predetermined reference signal 2, and if it is higher than the reference signal 2 (or lower than this reference signal, depending on the logic features of the circuit, here assumed that the feedback signal is proportional to the voltage of the load, that is, the lower the feedback signal is, the smaller the load is), then outputting the operated feedback signal directly as the pulse frequency control signal; otherwise, outputting the stable reference signal 2 as the pulse frequency control signal. At this time, the pulse frequency control signal is constant, and this corresponds to a simple PWM control mode. Similarly, the reference signal 2 should be determined according to the electric characteristics of the load, so that the results of the comparison and determination steps that are performed based on the reference signal 2 reflect correctly whether or not the load operate in an approximate non-load condition. Further, in order to switch from the PFM control to PFM+PWM control and to PWM control smoothly, if the load is determined to operate in an approximate non-load condition based on the reference signal 2, it can be determined based on the reference signal 1 that the load must operate in a light load condition, thereby assuring that at least one of the pulse width modulation signal and the pulse frequency control signal varies with the feedback signal in any event; 3) based on the determination result of step 2), if the load does not operate in a light load condition, the pulse width modulation signal is stabilized at the reference signal 1, and the pulse frequency control signal varies with the feedback signal, such that under the control of these two signals, the duty ratio of the outputted driving pulse is stable and the frequency of the outputted driving pulse varies with the feedback signal, and at this time the resonance circuit operates in the PFM control mode; if the load operates in a light load condition, both of the pulse width modulation signal and the pulse frequency control signal vary with the feedback signal, whereby under the control of these two signals, both the frequency and the duty ratio of the outputted driving pulse vary with the feedback signal and are commonly regulated, and at this time, the resonance circuit operates in a PFM+PWM control mode; and if the load operates in an approximate non-load condition, the pulse width modulation signal varies with the feedback signal, and the pulse frequency control signal is stabilized at the reference signal 2, and thus, under the control of these two signals, the frequency of the outputted driving pulse is stable, and the duty ratio of the outputted driving pulse varies with the feedback signal, and at this time, the resonance circuit operates in a PWM control mode. Referring to Figs. 4 and 5, a resonance DC/DC converter using the aforesaid control method will be described hereinafter. The resonance DC/DC converter comprises a drive circuit and a resonance circuit. An input switch device of the resonance circuit is controlled by the drive circuit according to the inputted driving pulse, wherein the resonance circuit supplies the converted power supply to the load circuit under the control of the drive circuit; and a negative feedback compensation regulator formed by a PI regulator, which performs a negative feedback compensation operation of a feedback voltage sampled from the load circuit and the given voltage to obtain a feedback signal.

The resonance DC/DC converter further comprises a discriminator which comprises an operational circuit 1 and an operational circuit 2, wherein the operational circuit 1 is provided with a reference signal 1 and a reference signal 2, and the feedback signal is operated together with the reference circuit 1, and then outputted as the pulse width modulation signal after being compared with the reference signal 1; and the feedback signal is operated together with the reference circuit 2, and outputted as the pulse frequency control signal after being compared with the reference signal 2; while both the reference signal 1 and reference signal 2 are determined according to the electric characteristic of the load, and the principles of setting thereof are the same as that of the aforesaid control method, and thus not repeated. When the load operates at the nearly non-load state, the discriminator outputs the stable pulse frequency control signal (i.e., reference signal 2) and pulse width modulation signal that varies as the feedback signal changes. When the load operates at a light load state, the discriminator outputs pulse frequency control signal that varies as the feedback signal changes and stable pulse width modulation signal (i.e., Reference signal 1). The resonance DC/DC converter further comprises a driving pulse generator which comprises a pulse frequency control circuit and a pulse width modulation circuit. The pulse frequency control circuit comprises a voltage controlled oscillator and a triangular wave generator connected in sequence. The pulse width modulation circuit is a PWM generating circuit. A pulse frequency control signal is inputted into the voltage controlled oscillator to control its frequency. The voltage controlled oscillator converts the voltage signal of the pulse frequency control signal to a square wave signal of variable output frequency. The triangular wave generator receives the square wave signal of variable frequency to generate a triangular wave signal with variable frequency, and outputs it to the synchronized terminal of the PWM generating circuit. The PWM generating circuit performs the pulse width modulation of the inputted variable frequency triangular wave signal according to the pulse width modulation signal $V_{comp}$ inputted from the comp terminal, and then outputs a driving pulse. When $V_{comp}$ is a stable output of Reference signal 1, the duty ratio of the driving pulse does not vary, while only the frequency varies, i.e., entering the PFM control mode. When both $V_{comp}$ and the pulse frequency control signal vary, the duty ratio of the driving pulse and the frequency vary simultaneously, i.e., entering the PFM+PWM control mode. When the pulse frequency control signal is a stable output of Reference signal 2, the frequency of the driving pulse does not vary, and only the duty ratio varies, i.e., entering the PWM control mode.

Usually, the reference signal 1 has a peak value that is a half of the peak value of the triangular wave. Thus, in the PFM control mode, the duty ratio of the outputted driving pulse is 50%. Certainly, the mere PWM control mode can be removed in accordance with the application requirement, and thus the output frequency of the driving pulse always depends on the feedback signal, which means that the reference signal 2 is set as 0.

The modules which realize the function of the pulse frequency control circuit and the pulse width modulation circuit are usually integrated in one chip. There can be various circuitry relationships among them as distinguished in accordance with the internal functional structures of the chip, such as, the pulse width modulation circuit may compare and synthesize the pulse width modulation signal $V_{comp}$ and variable frequency triangular wave signal to output the driving pulse. Briefly, the pulse frequency control circuit and the pulse width modulation circuit are always in series, that is, the pulse frequency control circuit generates the pulse signal, and controls its frequency, and the pulse width modulation circuit further determines the duty ratio of the pulse signal.

Figure 6 shows the functional relationship between the feedback signal $V_f$ outputted from the negative feedback compensation regulator of the resonance DC/DC converter and the operated frequency f, and between $V_f$ and the output V of the resonance circuit, wherein the horizontal axis represents the feedback signal $V_f$ outputted from the negative feedback compensation regulator provided that the maximum output of the negative feedback compensation regulator is 12v. The operation status of the aforesaid resonance DC/DC converter is described as follows:

    1. When the feedback signal varies from a to b, the control frequency does not change, i.e., f=fmax, and the duty ratio varies from 0% to D0%, the output V of the resonance circuit varies from 0 to V1, and the operation mode is PWM control mode.
    2. When the feedback signal varies from b to c, the control frequency varies at the same time as the duty ratio changes. The duty ratio varies from D0% to 50% of full pulse width (not including the dead area), causing the continuous increase of the output voltage. At the same time, the control frequency decreases from fmax to f0, and this change causes the increase of the output voltage as well. When the loop circuit voltage comes up to b, the duty ratio reaches the maximum value 50%, and the output voltage increases to V2, and the operation mode is PFM+PWM control mode.
    3. When the feedback signal varies from b to 12V, the duty ratio does not change, the control frequency decreases from f0 to fmin, and the output voltage increases continuously. When f=fmin, the output voltage reaches the maximum value V3, and the operation mode is PFM control mode.

It can be seen from fig. 6 that when the feedback signal increases, the output voltage increase, and thus it can realize the closed-loop control. In fig. 6, c determines the Reference signal 1 of the operation circuit 1, c determines the Reference signal 2 of the operation circuit 2. When the control system does not include only-PWM control mode, b=0.

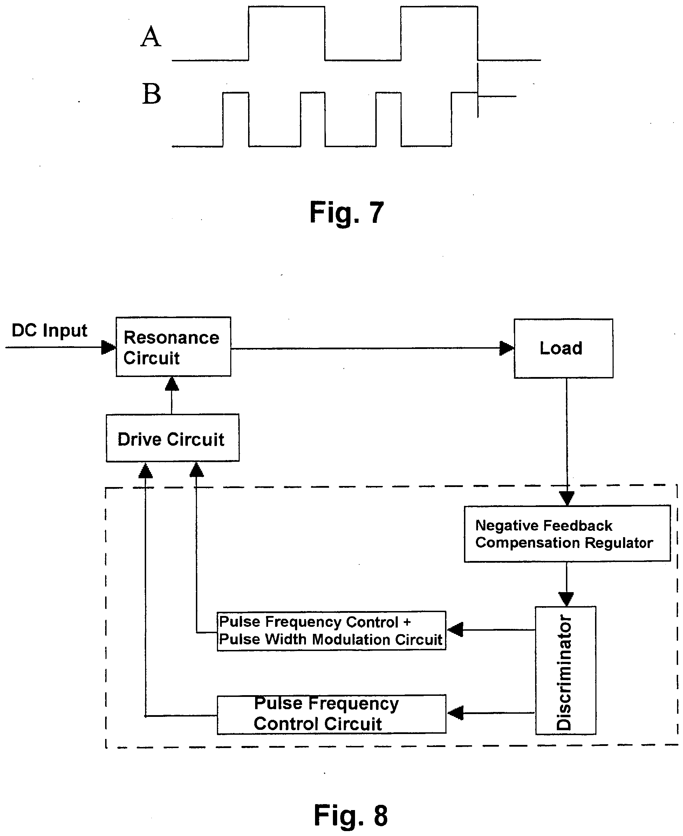

Figure 7 shows the wave shape of the driving pulse in different control modes. Wave A represents the wave shape of a driving pulse with 50% duty ratio under the control of the PFM, and wave B represents the wave shape under the control of the PFM+PWM. The duty ratio and frequency of the driving pulse vary with the output voltage until the duty ratio becomes zero.

The aforesaid resonance DC/DC converter uses an embodiment that the pulse frequency control circuit and the pulse width modulation circuit in series implements the alternative PFM control and the PFM+PWM control. This can be implemented by using another alternative scheme. As shown in Figure 8, the pulse frequency control circuit, and pulse frequency control plus pulse width modulation circuit are constructed by two driving signal generating circuits independent from each other. The discriminator controls alternatively one of them according the determination of the load to output the driving pulse, meeting the control requirements of the present invention, that is, if the discriminator determines that the load operates in a light load state or non-load state, a driving pulse modulation signal is output to the pulse frequency control plus pulse width modulation circuit to control the driving pulse of which the output frequency and duty ratio are both regulated as the feedback signal changes. Otherwise, the pulse frequency control circuit is provided with the driving pulse modulation signal and controlled to output the driving pulse of which the duty ratio is stable and the frequency varies as the feedback signal changes. This alternative embodiment can also achieve the object of the present invention, but more complicated.

In the aforesaid method, the values of the reference signal determine the time at which the control mode is switched. As to the selection of switching points, most resonance circuits rely on the determination of the state of the load, such as, in the areas of light load, non-load or nearly non-load, because the control ability of PFM is weaker in those areas. In particular, for some circuits, such as, a circuit of low voltage and large current, the aforesaid method is not only used in a "light load" of normal sense, sometimes, (because in this circuit, a "light load" of normal sense cannot completely cover the areas in which the output characteristic varies). At this time, the switching points can be determined according to the overall evaluation of the output characteristic of the circuit, i.e., the value of the reference signal, so that the PWM control mode can be used in the areas where the PFM control ability becomes weaker to improve or complement the control effect of PFM. Accordingly, the concept of "light load" and so on in the present invention should be understood as a load state in which the PFM control ability becomes weaker, not only be limited in the load state of "small current and voltage".

The control mode of the present invention is adopted to the circuit using the resonance principle, which includes a series resonance, a parallel resonance, a series-parallel resonance, and the like. The circuit topology may be full bridge and/or half bridge, and so on. When the operation frequency of the resonance circuit is lower, the converter operates in the pulse frequency control mode, and when the operation frequency is higher, the converter operates in the pulse frequency control plus pulse width modulation mode, thereby avoiding a high switching frequency in the non-load or light load conditions, and stabilizing the output voltage in the light load condition. The present invention can be implemented with a simple circuitry. The circuits can be smoothly switched between the states in different control modes, so as to ensure the reliability of the circuit.

The pulse frequency control plus pulse width modulation, the pulse frequency control, and the discriminator circuits of the present invention can be implemented by hardware circuits and/or software that be programmed according to the control method of the present invention. This can be understood by those skilled in the art according to the aforesaid descriptions.

**Claims**

1. A method for controlling a resonance DC/DC converter, wherein an input switch device of a resonance circuit of the converter is controlled by a driving pulse through a drive circuit, acquisition of a driving pulse comprising the following steps of:

> 1) acquiring a feedback ($V_f$) signal of a load circuit of the converter;
> 2) determining whether or not a load operates at a light load or non-load state based on the feedback signal ($V_f$); **characterized in** the step of
> 3) using a pulse signal of which both frequency and duty ratio are adjusted with the change of the feedback signal ($V_f$) as the driving pulse of the drive circuit if the load operates at the light load or non-load state so as to have the resonance circuit operate in a combined mode of pulse width modulation control and pulse frequency modulation control (PWM+PFM); otherwise, using a pulse signal of which the duty ratio is stable and the frequency varies with the change of the feedback signal ($V_f$) as the driving pulse of the drive circuit so as to have the resonance circuit operate in a pulse frequency modulation control mode (PFM), wherein, at the light load state, the frequency decreases with the increase of the duty ratio.

2. The method for controlling a resonance DC/DC converter of claim 1, **characterized in that** the step 1) comprises:

> 1a) sampling a feedback voltage from the load circuit; and
> 1b) having the feedback voltage subject to a negative feedback compensation operation so as to obtain the feedback signal ($V_f$).

3. The method for controlling a resonance DC/DC converter of claim 2, **characterized in that** in the step 2), a pulse frequency control signal and a pulse width modulation signal are obtained after an operational process of the feedback signal ($V_f$); the operational process of the pulse width modulation signal comprises comparing with a reference signal 1 to determine whether or not the load operates at the light load or non-load state, and the reference signal 1 is determined according to the electric characteristic of the load; and in the step 3), the driving pulse adjusted by both the pulse frequency control signal and the pulse width modulation signal is generated when the load operates at the light load or non-load state; otherwise, the driving pulse of which the duty ratio is stable and adjusted by the pulse frequency control signal only is generated.

4. The method for controlling a resonance DC/DC converter of claim 3, **characterized in that** in the step 2), the operational process of the pulse frequency control signal comprises comparing with a reference signal 2 to determine whether or not the load operates at a state approximate to non-load state, the reference signal 2 being determined according to the electric characteristic of the load, and the reference signal 2 satisfies, if it is determined that the load operates at the state approximate to non-load state based on the reference signal 2, and it must be determined that the load operates at the light-load or non-load state based on the reference signal 1; and in the step 3), when the load operates at the state approximate to non-load, the driving pulse of which the frequency is stable and is adjusted by the pulse width modulation signal only is generated.

5. A resonance DC/DC converter, comprising a drive circuit and a resonance circuit, the drive circuit controlling input switch device or devices of the resonance circuit based on an input driving pulse, and the resonance circuit providing an converted power supply to a load circuit under the control of the drive circuit, further comprising:

> a negative feedback compensation regulator for performing a negative feedback compensation operation of a feedback voltage sampled from the load circuit to obtain a feedback signal ($V_f$);
> a discriminator for determining a load state of the load circuit based on the inputted feedback signal ($V_f$) and outputting a driving pulse modulation signal; **characterized by** further comprising:
>
> > a driving pulse generator for modulating and outputting a driving pulse based on the inputted driving pulse modulation signal, wherein if the load operates at a light load or non-load state, the driving pulse of which both frequency and duty ratio are adjusted as the feedback signal ($V_f$) changes is generated; otherwise, the driving pulse of which the duty ratio is stable and the frequency varies with the change of the feedback signal ($V_f$) is generated, wherein, at the light load state, the frequency decreases with the increase of the duty ratio.

6. The resonance DC/DC converter of claim 5, **characterized in that** the driving pulse generator comprises a pulse frequency control circuit and a pulse frequency control plus pulse width modulation circuit; if the discriminator determines that the load operates at a light load or non-load state, the pulse frequency control plus pulse width modulation circuit is provided with the driving pulse modulation signal and controlled to output the driving pulse of which both the frequency and the duty ratio vary with the change of the feedback signal ($V_f$); otherwise, the pulse frequency control circuit is provided with the driving pulse modulation signal and controlled to output the driving pulse of which the duty ratio is stable and the frequency varies with the change of the feedback signal ($V_f$).

7. The resonance DC/DC converter of claim 5, **characterized in that** the discriminator comprises an operational circuit 1 and an operational circuit 2, wherein the operational circuit 1 is provided with a reference signal 1, and the driving pulse modulation signal comprises a pulse frequency control signal and a pulse width modulation signal; the feedback signal ($V_f$) being outputted as the pulse width modulation signal after operated and compared with the reference signal 1 by the operational circuit 1; the feedback signal ($V_f$) being outputted as the pulse frequency control signal after operated by the operational circuit 2; wherein the reference signal 1 is determined according to the electric characteristic of the load, and when the load operates at the light load or non-load state, the outputted pulse width modulation signal varies with the change of the feedback signal ($V_f$); otherwise, it is stable; the driving pulse generator comprises a pulse frequency control circuit and a pulse width modulation circuit, wherein the pulse frequency control circuit generates the variable frequency pulse of which the frequency is controlled by the pulse frequency control signal, and the pulse width modulation circuit outputs the driving pulse after the pulse width modulation of the variable frequency pulse based on the pulse width modulation signal.

8. The resonance DC/DC converter of claim 7, **characterized in that** the pulse width modulation circuit outputs the driving pulse after comparing and combining the pulse width modulation signal with the variable frequency pulse.

9. The resonance DC/DC converter of claim 7, **characterized in that** the variable frequency pulse is inputted at a synchronized terminal of the pulse width modulation circuit, and the pulse width modulation circuit performs the pulse width modulation for the inputted variable frequency pulse based on the pulse width modulation signal, and then outputs the driving pulse.

10. The resonance DC/DC converter of anyone of claims 7-9, **characterized in that** the operational circuit 2 is provided with a reference signal 2; the feedback signal ($V_f$) is operated and compared with the reference signal 2 by the operational circuit 2, and the output is the pulse frequency control signal; the reference signal 2 is determined according to the electric characteristic of the load so that the outputted pulse frequency control signal is stable when the load operates at the state that is approximate to non-load; otherwise, it varies as the feedback signal ($V_f$) changes; and the reference signal 2 satisfies, if it is determined that the load operates at the state approximate to non-load based on the reference signal 2, and it must be determined that the load operates at the light load or non-load state based on the reference signal 1.

11. The resonance DC/DC converter of anyone of claims 7-9, **characterized in that** the pulse frequency control circuit comprises a voltage controlled oscillator and a triangular wave generator connected in sequence; wherein the pulse frequency control signal is inputted into the voltage controlled oscillator to control its oscillating frequency, and the triangular wave generator outputs a variable frequency pulse of which the frequency is controlled.

**Patentansprüche**

1. Verfahren zur Steuerung eines DC-DC-Resonanzwandlers, wobei eine Eingangsschaltvorrichtung einer Resonanzschaltung des Wandlers von einem Treiberimpuls durch eine Treiberschaltung angesteuert wird, wobei die Erfassung eines Treiberimpulses die folgenden Schritte umfasst:

    1) Erfassen eines Rückführsignals ($V_f$) eines Laststromkreises des Wandlers;
    2) Bestimmen, ob eine Last in einem Leichtlast- oder Nichtlast-Zustand arbeitet oder nicht, basierend auf dem Rückführsignal ($V_f$); **gekennzeichnet durch** den Schritt:

    3) Verwenden eines Impulssignals, von welchem sowohl Frequenz als auch Tastgrad mit der Änderung des Rückführsignals ($V_f$) verstellt werden, als den Treiberimpuls der Treiberschaltung, falls die Last in dem Leichtlast- oder Nichtlast-Zustand arbeitet, um zu bewirken, dass die Resonanzschaltung in einer kombinierten Betriebsart der Pulsbreitenmodulationssteuerung und Pulsfrequenzmodulationssteuerung (PWM+PFM) arbeitet; andernfalls, Verwenden eines Impulssignals, dessen Tastgrad stabil ist und dessen Frequenz mit der Änderung des Rückführsignals ($V_f$) variiert, als den Treiberimpuls der Treiberschaltung, um zu bewirken, dass die Resonanzschaltung in einer Betriebsart der Pulsfrequenzmodulationssteuerung (PFM) arbeitet, wobei im Leichtlast-Zustand die Frequenz mit der Erhöhung des Tastgrades abnimmt.

2. Verfahren zur Steuerung eines DC-DC-Resonanzwandlers nach Anspruch 1, **dadurch gekennzeichnet, dass** Schritt 1) umfasst:

   1a) Abtasten einer Rückführspannung von dem Laststromkreis; und
   1b) Bewirken, dass die Rückführspannung einem Vorgang der Gegenkopplungskompensation unterzogen wird, um das Rückführsignal ($V_f$) zu gewinnen.

3. Verfahren zur Steuerung eines DC-DC-Resonanzwandlers nach Anspruch 2, **dadurch gekennzeichnet, dass** im Schritt 2) ein Pulsfrequenzsteuersignal und ein Pulsbreitenmodulationssignal nach einem Verarbeitungsprozess des Rückführsignals ($V_f$) gewonnen werden; wobei der Verarbeitungsprozess des Pulsbreitenmodulationssignals das Vergleichen mit einem Referenzsignal 1 umfasst, um zu bestimmen, ob die Last in dem Leichtlast- oder Nichtlast-Zustand arbeitet oder nicht, und das Referenzsignal 1 gemäß den elektrischen Kenngrößen der Last bestimmt wird; und im Schritt 3) der Treiberimpuls, der durch sowohl das Pulsfrequenzsteuersignal als auch das Pulsbreitenmodulationssignal verstellt wird, erzeugt wird, wenn die Last in dem Leichtlast- oder Nichtlast-Zustand arbeitet; andernfalls der Treiberimpuls erzeugt wird, dessen Tastgrad stabil ist und der nur durch das Pulsfrequenzsteuersignal verstellt wird.

4. Verfahren zur Steuerung eines DC-DC-Resonanzwandlers nach Anspruch 3, **dadurch gekennzeichnet, dass** im Schritt 2) der Verarbeitungsprozess des Pulsfrequenzsteuersignals das Vergleichen mit einem Referenzsignal 2 umfasst, um zu bestimmen, ob die Last in einem Zustand arbeitet, der dem Nichtlast-Zustand nahekommt, oder nicht, wobei das Referenzsignal 2 gemäß den elektrischen Kenngrößen der Last bestimmt wird, und das Referenzsignal 2 erfüllt, falls basierend auf dem Referenzsignal 2 bestimmt wird, dass die Last in dem Zustand arbeitet, der dem Nichtlast-Zustand nahekommt, und basierend auf dem Referenzsignal 1 bestimmt werden muss, dass die Last in dem Leichtlast- oder Nichtlast-Zustand arbeitet; und im Schritt 3), wenn die Last in dem Zustand arbeitet, der dem Nichtlast-Zustand nahekommt, der Treiberimpuls erzeugt wird, dessen Frequenz stabil ist und der nur durch das Pulsbreitenmodulationssignal erzeugt wird.

5. DC-DC-Resonanzwandler, welcher eine Treiberschaltung und eine Resonanzschaltung umfasst, wobei die Treiberschaltung eine Eingangsschaltvorrichtung oder -vorrichtungen der Resonanzschaltung basierend auf einem Eingangstreiberimpuls ansteuert und die Resonanzschaltung eine gewandelte Stromversorgung einem Laststromkreis unter der Steuerung der Treiberschaltung zuführt, ferner umfassend:

   einen Gegenkopplungskompensations-Regler zum Durchführen eines Vorgangs der Gegenkopplungskompensation einer von dem Laststromkreis abgetasteten Rückführspannung, um ein Rückführsignal ($V_f$) zu gewinnen;
   einen Diskriminator zum Bestimmen eines Lastzustands des Laststromkreises basierend auf dem eingegebenen Rückführsignal ($V_f$) und Ausgeben eines Treiberimpulsmodulationssignals;
   **dadurch gekennzeichnet, dass** er ferner umfasst:

   einen Treiberimpulsgenerator zum Modulieren und Ausgeben eines Treiberimpulses basierend auf dem eingegebenen Treiberimpulsmodulationssignal, wobei, falls die Last in einem Leichtlast- oder Nichtlast-Zustand arbeitet, der Treiberimpuls erzeugt wird, von welchem sowohl Frequenz als auch Tastgrad verstellt werden, wenn sich das Rückführsignal ($V_f$) ändert; andernfalls der Treiberimpuls erzeugt wird, dessen Tastgrad stabil ist und dessen Frequenz mit der Änderung des Rückführsignals ($V_f$) variiert, wobei im Leichtlast-Zustand die Frequenz mit der Erhöhung des Tastgrades abnimmt.

6. DC-DC-Resonanzwandler nach Anspruch 5, **dadurch gekennzeichnet, dass** der Treiberimpulsgenerator eine Pulsfrequenzsteuerschaltung und eine Pulsfrequenzsteuer- plus Pulsbreitenmodulationsschaltung umfasst; wobei, falls der Diskriminator bestimmt, dass die Last in dem Leichtlast- oder Nichtlast-Zustand arbeitet, der Pulsfrequenzsteuer- plus Pulsbreitenmodulationsschaltung das Treiberimpulsmodulationssignal zugeführt wird und sie angesteuert wird, den Treiberimpuls auszugeben, von welchem sowohl die Frequenz als auch der Tastgrad mit der Änderung des Rückführsignals ($V_f$) variieren; andernfalls der Pulsfrequenzsteuerschaltung das Treiberimpulsmodulationssignal zugeführt wird und sie angesteuert wird, den Treiberimpuls auszugeben, dessen Tastgrad stabil ist und dessen Frequenz mit der Änderung des Rückführsignals ($V_f$) variiert.

**7.** DC-DC-Resonanzwandler nach Anspruch 5, **dadurch gekennzeichnet, dass** der Diskriminator eine Verarbeitungsschaltung 1 und eine Verarbeitungsschaltung 2 umfasst, wobei der Verarbeitungsschaltung 1 ein Referenzsignal 1 zugeführt wird und das Treiberimpulsmodulationssignal ein Pulsfrequenzsteuersignal und ein Pulsbreitenmodulationssignal umfasst; wobei das Rückführsignal ($V_f$) als das Pulsfrequenzsteuersignal ausgegeben wird, nachdem es von der Verarbeitungsschaltung 2 verarbeitet wurde; wobei das Referenzsignal 1 gemäß den elektrischen Kenngrößen der Last bestimmt wird, und wenn die Last in dem Leichtlast- oder Nichtlast-Zustand arbeitet, das ausgegebene Pulsbreitenmodulationssignal mit der Änderung des Rückführsignals ($V_f$) variiert, und andernfalls stabil ist; wobei der Treiberimpulsgenerator eine Pulsfrequenzsteuerschaltung und eine Pulsbreitenmodulationsschaltung umfasst, wobei die Pulsfrequenzsteuerschaltung den Impuls mit variabler Frequenz erzeugt, dessen Frequenz von dem Pulsfrequenzsteuersignal gesteuert wird, und die Pulsbreitenmodulationsschaltung den Treiberimpuls nach der Pulsbreitenmodulation des Impulses mit variabler Frequenz basierend auf dem Pulsbreitenmodulationssignal ausgibt.

**8.** DC-DC-Resonanzwandler nach Anspruch 7, **dadurch gekennzeichnet, dass** die Pulsbreitenmodulationsschaltung den Treiberimpuls nach dem Vergleichen und Kombinieren des Pulsbreitenmodulationssignals mit dem Impuls mit variabler Frequenz ausgibt.

**9.** DC-DC-Resonanzwandler nach Anspruch 7, **dadurch gekennzeichnet, dass** der Impuls mit variabler Frequenz an einem synchronisierten Anschluss der Pulsbreitenmodulationsschaltung eingegeben wird und die Pulsbreitenmodulationsschaltung die Pulsbreitenmodulation für den eingegebenen Impuls mit variabler Frequenz basierend auf dem Pulsbreitenmodulationssignal ausführt und danach den Treiberimpuls ausgibt.

**10.** DC-DC-Resonanzwandler nach einem der Ansprüche 7-9, **dadurch gekennzeichnet, dass** der Verarbeitungsschaltung 2 ein Referenzsignal 2 zugeführt wird; das Rückführsignal ($V_f$) von der Verarbeitungsschaltung 2 verarbeitet und mit dem Referenzsignal 2 verglichen wird, und der Ausgang das Pulsfrequenzsteuersignal ist; das Referenzsignal 2 gemäß den elektrischen Kenngrößen der Last bestimmt wird, sodass das ausgegebene Pulsfrequenzsteuersignal stabil ist, wenn die Last in dem Zustand arbeitet, welcher dem Nichtlast-Zustand nahekommt; es andernfalls variiert, wenn sich das wenn sich das Rückführsignal ($V_f$) ändert; und das Referenzsignal 2 erfüllt, falls basierend auf dem Referenzsignal 2 bestimmt wird, dass die Last in dem Zustand arbeitet, der Nichtlast nahekommt, und basierend auf dem Referenzsignal 1 bestimmt werden muss, dass die Last in dem Leichtlast- oder Nichtlast-Zustand arbeitet.

**11.** DC-DC-Resonanzwandler nach einem der Ansprüche 7-9, **dadurch gekennzeichnet, dass** die Pulsfrequenzsteuerschaltung einen spannungsgesteuerten Oszillator und einen Dreieckswellengenerator, die in Reihe geschaltet sind, umfasst; wobei das Pulsfrequenzsteuersignal in den spannungsgesteuerten Oszillator eingegeben wird, um dessen Schwingfrequenz zu steuern, und der Dreieckswellengenerator einen Impuls mit variabler Frequenz ausgibt, dessen Frequenz gesteuert wird.

**Revendications**

**1.** Procédé de commande d'un convertisseur continu/continu de résonance, dans lequel un dispositif commutateur d'entrée d'un circuit de résonance du convertisseur est commandé par une impulsion d'attaque par l'intermédiaire d'un circuit d'attaque, l'acquisition d'une impulsion d'attaque comprenant les étapes suivantes :

1) d'acquisition d'un signal de rétroaction ($V_f$) d'un circuit de charge du convertisseur ;
2) de détermination du fait qu'une charge fonctionne, ou non, à un état de charge légère ou de non-charge sur la base du signal de rétroaction ($V_f$), **caractérisé par** l'étape
3) d'utilisation d'un signal d'impulsion dont à la fois la fréquence et le facteur de marche sont ajustés avec le changement du signal de rétroaction ($V_f$) en tant que l'impulsion d'attaque du circuit d'attaque si la charge fonctionne à l'état de charge légère ou de non-charge de manière à ce que le circuit de résonance fonctionne dans un mode combiné de commande de modulation de largeur d'impulsion et de commande de modulation de fréquence d'impulsion (PWM + PFM) ; sinon, d'utilisation d'un signal d'impulsion dont le facteur de marche est stable et la fréquence varie avec le changement du signal de rétroaction ($V_f$) en tant que l'impulsion d'attaque du circuit d'attaque de manière à ce que le circuit de résonance fonctionne dans un mode de commande de modulation de fréquence d'impulsion (PFM), dans lequel, à l'état de charge légère, la fréquence diminue avec l'augmentation du facteur de marche.

2. Procédé de commande d'un convertisseur continu/continu de résonance selon la revendication 1, **caractérisé en ce que** l'étape 1) comprend :

1a) le prélèvement d'une tension de rétroaction depuis le circuit de charge ; et
1b) le fait que la tension de rétroaction soit soumise à une opération de compensation à rétroaction négative de manière à obtenir le signal de rétroaction ($V_f$).

3. Procédé de commande d'un convertisseur continu/continu de résonance selon la revendication 2, **caractérisé en ce que** dans l'étape 2), un signal de commande de fréquence d'impulsion et un signal de modulation de largeur d'impulsion sont obtenus après un processus opérationnel du signal de rétroaction ($V_f$) ; le processus opérationnel du signal de modulation de largeur d'impulsion comprend une comparaison avec un signal de référence 1 pour déterminer si la charge fonctionne ou non à l'état de charge légère ou de non-charge, et le signal de référence 1 est déterminé selon la caractéristique électrique de la charge ; et dans l'étape 3), l'impulsion d'attaque ajustée à la fois par le signal de commande de fréquence d'impulsion et le signal de modulation de largeur d'impulsion est générée lorsque la charge fonctionne à l'état de charge légère ou de non-charge ; sinon, l'impulsion d'attaque dont le facteur de marche est stable et ajusté par le signal de commande de fréquence d'impulsion uniquement est générée.

4. Procédé de commande d'un convertisseur continu/continu de résonance selon la revendication 3, **caractérisé en ce que** dans l'étape 2), le processus opérationnel du signal de commande de fréquence d'impulsion comprend une comparaison avec un signal de référence 2 pour déterminer si la charge fonctionne ou non à un état approchant un état de non-charge, le signal de référence 2 étant déterminé selon la caractéristique électrique de la charge, et le signal de référence 2 est satisfaisant s'il est déterminé que la charge fonctionne à l'état approchant l'état de non-charge sur la base du signal de référence 2, et il doit être déterminé que la charge fonctionne à l'état de charge légère ou de non-charge sur la base du signal de référence 1 ; et dans l'étape 3), lorsque la charge fonctionne à l'état approchant la non-charge, l'impulsion d'attaque dont la fréquence est stable et est ajustée par le signal de modulation de largeur d'impulsion uniquement est générée.

5. Convertisseur continu/continu de résonance, comprenant un circuit d'attaque et un circuit de résonance, le circuit d'attaque commandant un ou des dispositifs commutateurs d'entrée du circuit de résonance sur la base d'une impulsion d'attaque d'entrée, et le circuit de résonance fournissant une alimentation de puissance convertie à un circuit de charge sous la commande du circuit d'attaque , comprenant en outre :

un régulateur de compensation à rétroaction négative destiné à réaliser une opération de compensation à rétroaction négative d'une tension de rétroaction prélevée du circuit de charge pour obtenir un signal de rétroaction ($V_f$) ;
un discriminateur destiné à déterminer un état de charge du circuit de charge sur la base du signal de rétroaction fourni en entrée ($V_f$), et à fournir en sortie un signal de modulation d'impulsion d'attaque;
**caractérisé en ce qu'**il comprend en outre :

un générateur d'impulsion d'attaque destiné à moduler et fournir en sortie une impulsion d'attaque sur la base du signal de modulation d'impulsion d'attaque fourni en entrée, dans lequel si la charge fonctionne à un état de charge légère ou de non-charge, l'impulsion d'attaque dont à la fois la fréquence et le facteur de marche sont ajustés lorsque le signal de rétroaction ($V_f$) change est générée ; sinon, l'impulsion d'attaque dont le facteur de marche est stable et la fréquence varie avec le changement du signal de rétroaction ($V_f$) est générée, dans lequel, à l'état de charge légère, la fréquence diminue avec l'augmentation du facteur de marche.

6. Convertisseur continu/continu de résonance selon la revendication 5, **caractérisé en ce que** le générateur d'impulsion d'attaque comprend en outre un circuit de commande de fréquence d'impulsion et un circuit de commande de fréquence d'impulsion plus modulation de largeur d'impulsion ; si le discriminateur détermine que la charge fonctionne à un état de charge légère ou de non-charge, le circuit de commande de fréquence d'impulsion plus modulation de largeur d'impulsion est pourvu du signal de modulation d'impulsion d'attaque et commandé pour fournir en sortie l'impulsion d'attaque dont à la fois la fréquence et le facteur de marche varient avec le changement du signal de rétroaction ($V_f$) ; sinon, le circuit de commande de fréquence d'impulsion est pourvu du signal de modulation d'impulsion d'attaque et commandé pour fournir en sortie l'impulsion d'attaque dont le facteur de marche est stable et la fréquence varie avec le changement du signal de rétroaction (V$_f$).

7. Convertisseur continu/continu de résonance selon la revendication 5, **caractérisé en ce que** le discriminateur comprend un circuit opérationnel 1 et un circuit opérationnel 2, dans lequel le circuit opérationnel 1 est pourvu d'un signal de référence 1, et le signal de modulation d'impulsion d'attaque comprend un signal de commande de fréquence d'impulsion et un signal de modulation de largeur d'impulsion; le signal de rétroaction (V$_f$) étant fourni en sortie en tant que le signal de modulation de largeur d'impulsion après opération et comparaison avec le signal de référence 1 par le circuit opérationnel 1; le signal de rétroaction (V$_f$) étant fourni en sortie en tant que le signal de commande de fréquence d'impulsion après opération par le circuit opérationnel 2 ; dans lequel le signal de référence 1 est déterminé selon la caractéristique électrique de la charge, et lorsque la charge fonctionne à l'état de charge légère ou de non-charge, le signal de modulation de largeur d'impulsion fourni en sortie varie avec le changement du signal de rétroaction (V$_f$) ; sinon, il est stable; le générateur d'impulsion d'attaque comprend un circuit de commande de fréquence d'impulsion et un circuit de modulation de largeur d'impulsion , dans lequel le circuit de commande de fréquence d'impulsion génère l'impulsion à fréquence variable dont la fréquence est commandée par le signal de commande de fréquence d'impulsion, et le circuit de modulation de largeur d'impulsion fournit en sortie l'impulsion d'attaque après la modulation de largeur d'impulsion de l'impulsion à fréquence variable sur la base du signal de modulation de largeur d'impulsion.

8. Convertisseur continu/continu de résonance selon la revendication 7, **caractérisé en ce que** le circuit de modulation de largeur d'impulsion fournit en sortie l'impulsion d'attaque après comparaison et combinaison du signal de modulation de largeur d'impulsion avec l'impulsion à fréquence variable.

9. Convertisseur continu/continu de résonance selon la revendication 7, **caractérisé en ce que** l'impulsion à fréquence variable est fournie en entrée au niveau d'une borne synchronisée du circuit de modulation de largeur d'impulsion, et le circuit de modulation de largeur d'impulsion réalise la modulation de largeur d'impulsion pour l'impulsion à fréquence variable fournie en entrée sur la base du signal de modulation de largeur d'impulsion , puis fournit en sortie l'impulsion d'attaque.

10. Convertisseur continu/continu de résonance selon l'une quelconque des revendications 7 à 9, **caractérisé en ce que** le circuit opérationnel 2 est pourvu d'un signal de référence 2 ; le signal de rétroaction (V$_f$) est opéré et comparé au signal de référence 2 par le circuit opérationnel 2, et la sortie est le signal de commande de fréquence d'impulsion; le signal de référence 2 est déterminé selon la caractéristique électrique de la charge de sorte que le signal de commande de fréquence d'impulsion fourni en sortie est stable lorsque la charge fonctionne à l'état approchant la non-charge ; sinon, il varie lorsque le signal de rétroaction (V$_f$) change ; et le signal de référence 2 est satisfaisant s'il est déterminé que la charge fonctionne à l'état approchant la non-charge sur la base du signal de référence 2, et il doit être déterminé que la charge fonctionne à l'état de charge légère ou de non-charge sur la base du signal de référence 1.

11. Convertisseur continu/continu de résonance selon l'une quelconque des revendications 7 à 9, **caractérisé en ce que** le circuit de commande de fréquence d'impulsion comprend un oscillateur commandé en tension et un générateur d'onde triangulaire connectés en séquence; dans lequel le signal de commande de fréquence d'impulsion est fourni en entrée dans l'oscillateur commandé en tension pour commander sa fréquence d'oscillation, et le générateur d'onde triangulaire fournit en sortie une impulsion à fréquence variable dont la fréquence est commandée.

**Fig. 1**

**Fig. 2**

**Fig. 3**

**Fig. 4**

**Fig. 5**

**Fig. 6**

A

B

## Fig. 7

DC Input → Resonance Circuit → Load

Drive Circuit

Negative Feedback Compensation Regulator

Pulse Frequency Control + Pulse Width Modulation Circuit

Pulse Frequency Control Circuit

Discriminator

## Fig. 8

**EP 1 973 220 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H07135769 A
- US 6366070 B1
- CN 1595780 A
- US 20050052249 A1